# EUROPÄISCHE PATENTSCHRIFT

(11) **EP 2 428 650 B1**
(45) Veröffentlichungstag und Bekanntmachung des Hinweises auf die Patenterteilung: **20.12.2017**
(21) Anmeldenummer: 11178989.7
(22) Anmeldetag: 26.08.2011
(51) Int. Cl.: F01D 21/00, F01D 25/00, F01D 25/28, G01N 29/265

(54) **Inspektionsfahrzeug für die Inspektion von im wesentlichen zylindrischen Objekten**
Inspection vehicle for the inspection of substantially cylindrical objects
Véhicule d'inspection pour l'inspection d'objets essentiellement cylindriques

(30) Priorität: 09.09.2010 CH 14502010
(43) Veröffentlichungstag der Anmeldung: 14.03.2012
(73) Patentinhaber: General Electric Technology GmbH, 5400 Baden (CH)
(72) Erfinder: Thommen-Stamenkov, Igor, 4600 Olten (CH); Zesch, Wolfgang, 5210 Windisch (CH); Laborde, Stephane, 91330 Yerres (FR)
(74) Vertreter: General Electric Technology GmbH

(56) Entgegenhaltungen:
- JP-A- 2000 221 178
- JP-A- 2006 170 685
- US-A- 5 619 423
- US-A- 5 623 107
- US-A- 6 016 701
- US-A1- 2003 221 497

## Beschreibung

### TECHNISCHES GEBIET

Die vorliegende Erfindung bezieht sich auf das Gebiet der Inspektion von grossen Teilen rotierender Maschinen. Sie betrifft ein Inspektionsfahrzeug gemäss dem Oberbegriff des Anspruchs 1.

### STAND DER TECHNIK

Schnell rotierende Bauteil, im Speziellen Rotoren von Dampfturbinen, aber auch anderen Turbinen, müssen von Zeit zu Zeit einer Inspektion unterzogen werden, bei der insbesondere der Rotor der Turbine auf Risse untersucht wird. Derartige Risse treten oft in umlaufenden Schaufelnuten auf, in denen die Schaufeln der Turbine gegen die auftretenden Zentrifugalkräfte gehalten werden. Solche Inspektionen werden häufig mit Ultraschallsensoren vorgenommen, die als Einkanal- oder Mehrkanal-Ultraschall-Messköpfe (Phased Arrays) ausgebildet sind und Laufzeitdauerbestimmungen durchführen (sogenannte UT/PAATOFD-Technik). Bei den Inspektionen müssen eine oder zwei Ultraschallsensoren mit grosser Genauigkeit an den Füssen der im Rotor montierten Schaufeln entlang geführt werden, um den entscheidenden Bereich des Rotors, nämlich die Umfangsnuten, abzutasten.

Damit bei diesen Inspektionen eine gute Reproduzierbarkeit der Ergebnisse und eine gute Qualität der ermittelten Daten erreicht werden kann, sollte die Inspektion mit einer entsprechenden Positionsbestimmung verbunden sein. Von grossem Vorteil ist das motorisierte Inspizieren, einerseits wegen der reproduzierbaren und genau einhaltbaren Fahrgeschwindigkeit und damit verbunden der besseren Reproduzierbarkeit der Messeresultate, andererseits wegen der schlechten Erreichbarkeit der zu inspizierenden Regionen (zwischen den Schaufelreihen).

Da bei solchen Inspektionen in den Nuten zwischen den Schaufelreihen die dort vorhandenen kreisringförmigen Dichtungsstreifen im Nutboden oftmals vorher nicht ausgebaut werden, stellen sie ein ernsthaftes Hindernis für die automatisierte Inspektion dar.

Im Stand der Technik war es bisher üblich, derartige Inspektionen manuell oder mit Entfernen der Dichtungsstreifen vor der Inspektion und Wiedereinsetzen der Dichtungsstreifen nach der Inspektion durchzuführen. Ein derartiges Vorgehen ist jedoch zeitaufwändig, liefert nur eine beschränkte Datenqualität sowie wenig reproduzierbare Ergebnisse und wird durch eine mangelnde Zugänglichkeit behindert.

Es ist aber auch bereits ein stationärer Roboterarm zum Einsatz gekommen. Der Roboterarm ist in seiner Anwendung sehr flexibel, setzt jedoch einen grossen Roboter voraus und benötigt eine lange Einrichtungszeit. Besonders nachteilig ist jedoch, dass der zu inspizierende Rotor gedreht werden muss, was einen (schweren und teuren) Drehmechanismus erforderlich macht.

Es sind aber auch bereits mobile Scanner bekannt, die den Umfang des Rotors abfahren können und dabei die erforderliche Inspektion vornehmen. Diese mobilen Scanner sind meist mit breiten magnetischen Rädern ausgestattet, so dass sie mit am Umfang des Rotors auftretenden Hindernissen, insbesondere mit kreisringförmigen Dichtungsstreifen, die mehrfach vorhanden sein können und teilweise einen Abstand von nur 9 mm aufweisen, nicht zurecht kommen. So offenbart beispielweise die Druckschrift US 5,623,107 einen Scanner für die umlaufende Schwalbenschwanz-Nut eines Turbinen-Rotors, welcher für das Fahren auf einer ungestörten (ebenen) zylindrischen Oberfläche ausgelegt und mit breiten magnetischen Rädern versehen ist. Die Druckschrift US 5,619,423 offenbart eine Vorrichtung für die Ultraschall-Inspektion von mit Flüssigkeit gefüllten Rohren oder Tanks. Die Vorrichtung ist dafür ausgelegt, entweder auf einer ebenen Fläche oder auf der Aussenseite von Rohren ausschliesslich in Rohr-Längsrichtung zu fahren. Eine Inspektion mit Bewegung in Umfangsrichtung, insbesondere ein anpassbares Überfahren von Hindernissen, ist nicht vorgesehen bzw. wird auch nicht erörtert. Das Dokument JP 206 170685 A offenbart ein Inspektionsfahrzeug, welches eine Bodenfreiheit aufweist und daher ein Überfahren von am Aussenumfang des zu inspizierenden zylindrischen Objektes befindlichen Hindernissen zwar ermöglicht, wobei aber hier wie bereits oben beschrieben magnetische Räder mit den genannten Nachteilen eingesetzt werden.

### DARSTELLUNG DER ERFINDUNG

Es ist daher Aufgabe der Erfindung, ein Inspektionsfahrzeug zu schaffen, welches für die automatische Inspektion von Rotoren geeignet ist, bei denen am Umfang Hindernisse, insbesondere in Form von kreisringförmigen Dichtungsstreifen, vorhanden sind, die einem Abfahren des Umfangs durch ein Fahrzeug entgegenstehen.

Die Aufgabe wird durch die Gesamtheit der Merkmale des Anspruchs 1 gelöst. Das erfindungsgemässe Inspektionsfahrzeug, welches ein Chassis sowie eine Mehrzahl von Rädern aufweist, die an dem Chassis drehbar und zumindest teilweise motorisch antreibbar angeordnet sind, derart, dass das Chassis auf den Rädern am Aussenumfang des zu inspizierenden zylindrischen Objekts entlang bewegt werden kann, wobei am Chassis magnetische Mittel angeordnet sind, welche das Inspektionsfahrzeug auf der Oberfläche des zylindrischen Objekts halten, zeichnet sich dadurch aus, dass es eine ausreichende Bodenfreiheit aufweist, welche ein problemloses Überfahren von am Aussenumfang des zu inspizierenden zylindrischen Objekts befindlichen Hindernissen, insbesondere einem oder mehreren kreisringförmigen, aus der Zylinderoberfläche radial herausstehenden und sich mehrheitlich in Umfangsrichtung erstreckenden Hindernissen, insbesondere radial herausstehenden Dichtungsstreifen, ermöglicht, wobei erfindungsgemäss die magnetischen Mittel eine Magnetanordnung umfassen, welche unterhalb des Chassis im Bereich der Bodenfreiheit angeordnet ist. Durch die Trennung von Rädern und magnetischen Mitteln können Bewegung und Haftung des Fahrzeugs getrennt optimiert werden. Insbesondere können die Räder sehr schmal gewählt werden, so dass das Fahrzeug auch zwischen eng benachbarten Hindernissen bzw. Dichtungsstreifen eingesetzt werden kann.

Eine andere Ausgestaltung der Erfindung ist dadurch gekennzeichnet, dass die Magnetanordnung einen oder mehrere Permanentmagnete umfasst. Hierdurch lassen sich ohne Energieaufwand hohe Haftkräfte realisieren.

Eine andere Ausgestaltung der Erfindung ist dadurch gekennzeichnet, dass die Magnetanordnung einen oder mehrere, vorzugsweise an- und abschaltbare, Elektromagnete umfasst. Hier muss für die Haftung zwar Energie aufgewendet werden, dafür kann die Haftung jedoch gesteuert werden.

Eine andere Ausgestaltung der Erfindung ist dadurch gekennzeichnet, dass zum Ausweichen von Hindernissen der Abstand der Magnetanordnung zum Boden und/oder die Position der Magnetanordnung quer zur Fahrtrichtung verstellbar sind. Hierdurch lässt sich das Fahrzeug flexibel an unterschiedliche Einsatzbedingungen anpassen.

Eine andere Ausgestaltung der Erfindung ist dadurch gekennzeichnet, dass die Magnetanordnung zur Verringerung der Wechselwirkung mit überfahrenen Hindernissen mit einer nicht-magnetischen Abdeckung versehen ist. Hierdurch können bei Kollisionen mit den Hindernissen Beschädigungen verringert oder ganz vermieden sowie das Haften an einem magnetischen Hindernis verhindert werden.

Eine andere Ausgestaltung der Erfindung ist dadurch gekennzeichnet, dass die Räder quer zur Fahrtrichtung verstellbar sind. Auch diese Massnahme führt zu einer erhöhten Flexibilität im Einsatz, da die Spurbreite auf die Art des Hindernisses eingestellt werden kann.

Eine andere Ausgestaltung der Erfindung ist dadurch gekennzeichnet, dass das Inspektionsfahrzeug eine Antriebseinheit aufweist, welche wenigstens eines der Räder auf steuerbare Weise antreibt. Hierdurch wird ein automatisierter, autonomer Betrieb des Fahrzeugs ermöglicht.

Eine andere Ausgestaltung der Erfindung ist dadurch gekennzeichnet, dass an dem Inspektionsfahrzeug Mittel zur seitlichen Führung des Fahrzeugs vorgesehen sind.

Insbesondere ist als seitliches Führungsmittel an wenigstens einer Längsseite des Fahrzeugs eine sich in Fahrtrichtung erstreckende Führungsstruktur angeordnet, mittels der das Inspektionsfahrzeug an einem Durchmesserabsatz des zylindrischen Objekts in Umfangsrichtung geführt werden kann. Es ist aber auch denkbar, dass Fahrzeug an den umlaufenden Dichtstreifen zu führen.

Vorzugsweise umfasst die Führungsstruktur eine längliche Führungsschiene.

Wenn die Führungsstruktur bzw. Führungsschiene magnetisch ist, wird sie von der Führungskontur angezogen. Damit ist eine beidseitige Führung mit nur einer Schiene möglich.

Eine andere Ausgestaltung der Erfindung ist dadurch gekennzeichnet, dass die Führungsmittel Sensoren zur Messung des seitlichen Abstands aufweisen, welche mit Mitteln zur Steuerung der Fahrtrichtung des Fahrzeugs zusammenwirken. Mittels einer Kontrolleinheit kann dann der seitliche Abstand gemäss einem vorgegebenen konstanten oder zeitlich variablen Wert eingeregelt werden. Das Fahrzeug kann dabei beispielsweise aktiv über eine zusätzliche Lenkachse gesteuert werden.

Eine andere Ausgestaltung der Erfindung ist dadurch gekennzeichnet, dass das Inspektionsfahrzeug einen oder mehrere Sensoren aufweist, welche zur, vorzugsweise zerstörungsfreien, Inspektion des zylindrischen Objekts geeignet sind. Mit den Sensoren lässt sich das Objekt über einen weiten Bereich mit dem Fahrzeug abtasten und auf Veränderungen untersuchen.

Eine andere Ausgestaltung der Erfindung ist dadurch gekennzeichnet, dass die Sensoren verstellbar und/oder gefedert am Ende eines Sensorarms befestigt sind, der sich vom Chassis des Inspektionsfahrzeugs aus in Fahrtrichtung erstreckt. Der Sensorkopf ist damit an die Geometrie des Objekts anpassbar und wird zugleich weniger vom Fahrzeug selbst beeinflusst.

Eine andere Ausgestaltung der Erfindung ist dadurch gekennzeichnet, dass die Sensoren als Ultraschallsensoren (UT-Sensoren), insbesondere als Phased-Array-Sensoren, ausgebildet sind. Hierdurch lässt sich je nach Art der Sensoren eine Vielzahl von Inspektionen mit einer bewährten Technologie durchführen. Mit Phased-Array-Sensoren lässt sich dabei mit einem elektronischen Scannen ein grösserer Bereich des zu untersuchenden Objekts abdecken.

Eine andere Ausgestaltung der Erfindung ist dadurch gekennzeichnet, dass am Inspektionsfahrzeug Bewegungssensoren vorgesehen sind, welche den zurückgelegten Weg und/oder die momentane Fahrgeschwindigkeit des Inspektionsfahrzeugs aufnehmen. Mit den Bewegungssensoren lässt sich nicht nur die Bewegung des Fahrzeugs überwachen und steuern, sondern es können auch die Inspektionsdaten den jeweiligen Fahrzeugpositionen zugeordnet werden, um so eine sichere Lokalisierung von detektierten Fehlern im Objekt zu gewährleisten.

Eine andere Ausgestaltung der Erfindung ist dadurch gekennzeichnet, dass als Bewegungssensor ein Encoder vorgesehen ist, welcher die Drehung wenigstens eines der Räder aufnimmt. Hierdurch lassen sich besonders einfach Position und Geschwindigkeit des Fahrzeugs bestimmen und überwachen.

Eine andere Ausgestaltung der Erfindung ist dadurch gekennzeichnet, dass zusätzlich ein externer Bewegungssensor vorhanden ist, welcher die Bewegung des Fahrzeugs relativ zum Boden aufnimmt. Mit dem externen Bewegungssensor kann ein Schlupf der Räder auf dem Untergrund neutralisiert werden.

Eine wieder andere Ausgestaltung der Erfindung ist dadurch gekennzeichnet, dass eine Steuerung zur Steuerung der Bewegung des Inspektionsfahrzeugs auf der Oberfläche des zylindrischen Objekts vorgesehen ist, welche die Inspektionsergebnisse in Beziehung zur jeweiligen Position des Inspektionsfahrzeugs auf der Oberfläche des zylindrischen Objekts setzt.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: eine Seitenansicht eines Rotors einer Dampfturbine mit der zugehörigen Beschaufelung;
- Fig. 2: den Längsschnitt durch einen Turbinenrotor im Bereich einer Durchmesserstufe beziehungsweise Nut, wobei im Nutboden als Hindernisse für ein Inspektionsfahrzeug mehrere kreisringförmige Dichtungsstreifen angeordnet sind;
- Fig. 3: die Seitenansicht eines Inspektionsfahrzeugs gemäss einem Ausführungsbeispiel der Erfindung;
- Fig. 4: in Umfangsrichtung gesehen das Inspektionsfahrzeug aus Fig. 3 beim Einsatz auf dem Nutboden einer Nut gemäss Fig. 2; und
- Fig. 5: das stark vereinfachte Schema einer Steuerschaltung für ein Inspektionsfahrzeug gemäss der Erfindung.

### WEGE ZUR AUSFÜHRUNG DER ERFINDUNG

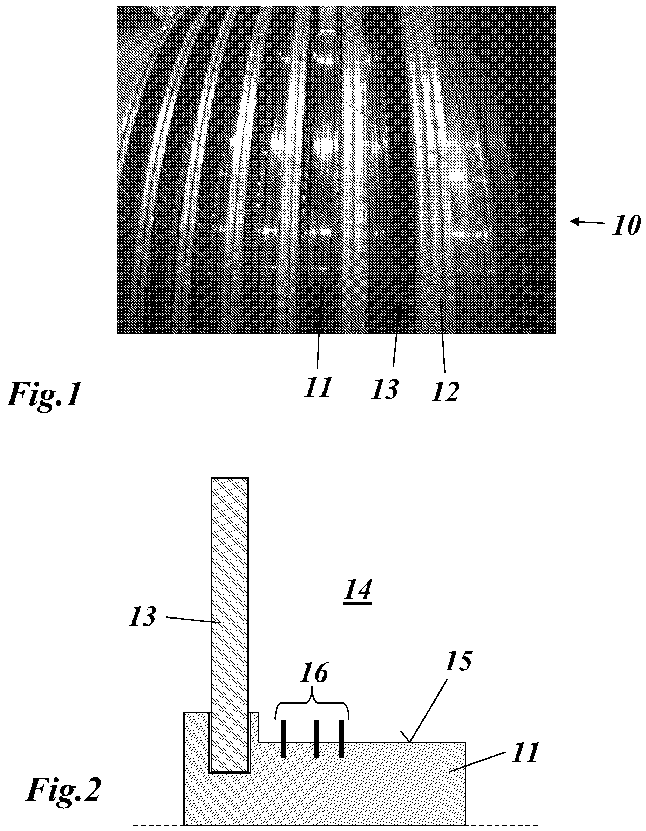

Fig. 1 zeigt die fotografische Aufnahme eines Rotors 10 einer Dampfturbine, der mehrere Schaufelreihen 12 mit Laufschaufeln 13 aufweist, die um eine zentrale Rotorwelle 11 herum angeordnet sind. Die Laufschaufeln 13 werden mit ihren Schaufelfüssen in ringförmig umlaufenden Schaufelnuten gehalten und bilden zwischen sich einen umlaufenden Schaufelzwischenraum 14, von denen einer ausschnittweise in Fig. 2 im Querschnitt dargestellt ist. Der Schaufelzwischenraum 14 der Fig. 2 umfasst eine Laufschaufel 13, die in einer umlaufenden Schaufelnut in der Rotorwelle 11 sitzt, und wird seitlich von den Laufschaufeln 13 begrenzt, die beim Abfahren des Schaufelzwischenraums 14 durch ein Fahrzeug als seitliche Referenzflächen benutzt werden können.

In Fig. 2 sind in der Aussenfläche 15 der Rotorwelle 11 beispielhaft drei nebeneinander liegende Dichtungsstreifen 16 gezeigt, die in die Aussenfläche 15 eingelassen sind, aber ein Stück weit aus der Aussenfläche 15 radial herausragen. Es ist vor allem diese Art des Hindernisses, die den Einsatz eines herkömmlichen Fahrzeugs unmöglich macht.

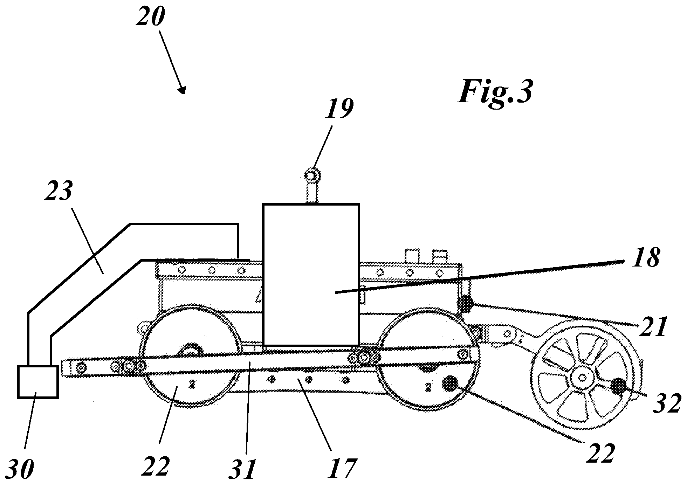

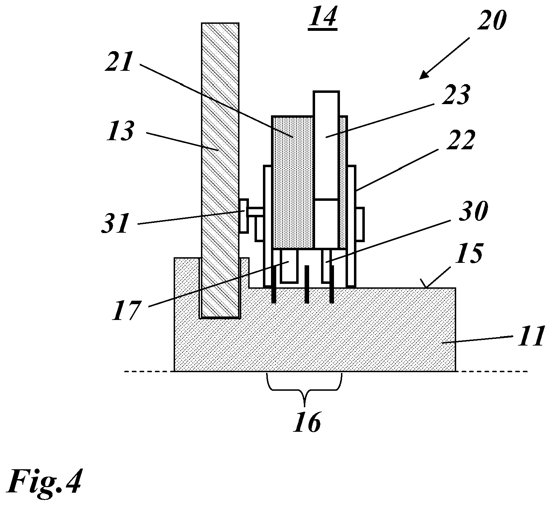

Das neuartige Inspektionsfahrzeug, das in Fig. 3 und 4 in einem bewährten Ausführungsbeispiel dargestellt ist, ist so ausgelegt, dass es durch derartige Hindernisse in seiner Fortbewegung nicht beeinträchtigt wird. Fig. 3 zeigt das beispielhafte Inspektionsfahrzeug 20 nach der Erfindung in seitlicher Ansicht, während Fig. 4 dasselbe Fahrzeug in der Ansicht von vorne wiedergibt.

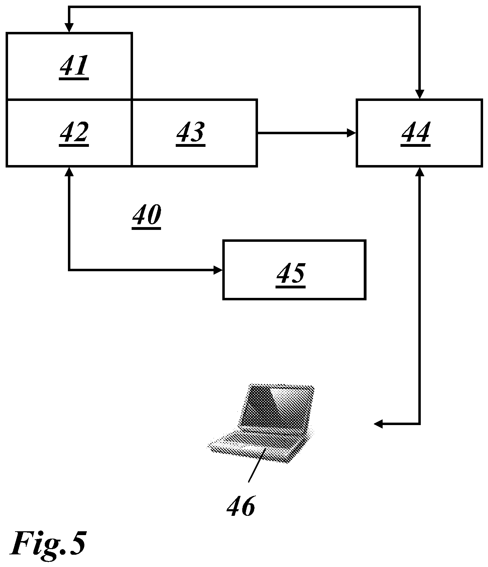

Das Inspektionsfahrzeug 20 weist ein kompaktes Chassis 21 von im wesentlichen rechteckiger Gestalt auf, an dem in Fahrtrichtung vorne und hinten jeweils ein Paar Räder 22 drehbar angebracht sind, von denen wenigstens eines durch eine im Chassis 21 untergebrachte Antriebseinheit (42 in Fig. 5) antreibbar ist. Wie man in Fig. 4 in der Ansicht von vorne erkennt, sind die Räder 22 sehr schmal ausgeführt, um ohne Schwierigkeiten zwischen eng nebeneinander liegenden Dichtungsstreifen 16 auf der Aussenfläche 15 abrollen zu können. Des Weiteren haben die Räder 22 einen vergleichsweise grossen Aussendurchmesser, um dem Inspektionsfahrzeug 20 die notwendige Bodenfreiheit zu verschaffen, damit das Fahrzeug sicher über die aus der Aussenfläche 15 heraus stehenden Dichtungsstreifen 16 fahren kann (Fig. 4).

Auf der Unterseite des Chassis 21 ist eine Magnetanordnung 17 mit Permanentmagneten angeordnet, die dafür sorgt, dass das Inspektionsfahrzeug 20 beim Fahren sicher auf der Umfangsfläche des Rotors 10 gehalten wird. Die Magnetanordnung 17 ist leicht gekrümmt ausgeführt, damit sie besser an die gekrümmte Umfangsfläche des Rotors angepasst ist. Die Magnetanordnung 17 wird auf der Unterseite des Chassis 21 von einem Magnetträger 18 gehalten, der am Chassis 21 befestigt ist und mittels einer Verstellvorrichtung 19 in der Höhe verstellt werden kann. Damit ist es möglich, die Magnetanordnung 17 von Hand jeweils in der Höhe über dem Boden so einzustellen, dass Hindernisse sicher überfahren werden können und gleichzeitig die notwendigen Haftkräfte für das Fahrzeug aufgebracht werden. Ausserdem kann damit auf einfache Weise die magnetische Haftkraft beim Platzieren und Entfernen des Fahrzeugs auf dem sowie von dem Prüfobjekt reduziert werden. Der Magnetträger 18 mit der daran angebrachten Magnetanordnung 17 kann vorzugsweise aber auch quer zur Fahrtrichtung verschoben werden, um die schmal ausgeführte Magnetanordnung 17 auf eine Lücke zwischen benachbarten Dichtungsstreifen 16 einstellen zu können (Fig. 4).

Am Chassis 21 ist weiterhin ein in Fahrtrichtung erstreckender Sensorarm 23 angebracht, der weit über das Chassis 21 vorsteht und an seinem vorderen freien Ende einen (oder mehrere) entsprechende(n) Sensor(en) 30 trägt. Durch diese Ausgestaltung ist eine flexible Anpassung des Inspektionsfahrzeugs 20 an unterschiedliche Gegebenheiten am Rotor 10 möglich. Wie man in Fig. 4 deutlich erkennt, kann auf diese Weise das Inspektionsfahrzeug 20 ohne Schwierigkeiten im Schaufelzwischenraum 14 des Rotors 10 verfahren werden, obgleich mehrere Dichtungsstreifen 16 als Hindernisse überfahren werden müssen.

Seitlich am Inspektionsfahrzeug 20 ist eine sich in Fahrtrichtung erstreckende Führungsschiene 31 ausserhalb der Räder 22 angeordnet, mit deren Hilfe die Fahrtrichtung des Inspektionsfahrzeuges 20 an einer zeitlichen Referenzfläche ausgerichtet und parallel zu dieser werden kann.

Am dem Sensorkopf 28 gegenüberliegenden Ende des Fahrzeugs ist eine separate Wegmessvorrichtung 32 am Chassis 21 befestigt und sitzt auf dem Boden auf. Mit der Wegmessvorrichtung 32 kann unabhängig von einem Schlupf der Räder 22 der vom Inspektionsfahrzeug 20 zurückgelegte Weg aufgenommen beziehungsweise die Geschwindigkeit des Inspektionsfahrzeugs 20 ermittelt werden.

Die für eine automatische Inspektion erforderliche Steuerschaltung ist schematisch in Fig. 5 dargestellt. Der Antrieb 42 des Inspektionsfahrzeugs 20 ist mit einer Stromversorgungseinheit 45 verbunden. Eine Wegmessvorrichtung 43 liefert Positionssignale an eine Scan-Software 44. In diese Software werden auch Ergebnisse der Sensoren 41 für die Rissprüfung eingespeist. Die Scan-Software 44, die auf einem Rechner 46 läuft, verknüpft die Positions- und Inspektionsdaten und wertet diese aus.

Insgesamt ergeben sich durch das vorgeschlagene Inspektionsfahrzeug die folgenden Vorteile:
- die Inspektion ist zuverlässiger;
- für die Inspektion müssen keine oder nur geringe Vorbereitungen getroffen werden;
- der Rotor muss für die Inspektion nicht gedreht werden, so dass sich keine Konflikte mit anderen Servicearbeiten ergeben und keine schweren, oftmals nicht verfügbaren Hilfsmittel zur Drehung des Rotors benötigt werden;
- die Inspektion erfolgt sehr schnell;
- das Inspektionsfahrzeug ist klein und leicht, die zugehörige Ausrüstung ist leicht transportierbar.

### BEZUGSZEICHENLISTE

- 10: Rotor (zum Beispiel Dampfturbine)
- 11: Rotorwelle
- 12: Schaufelreihe
- 13: Laufschaufel
- 14: Schaufelzwischenraum (umlaufend)
- 15: Aussenfläche (Rotorwelle)
- 16: Dichtungsstreifen
- 17: Magnetanordnung
- 18: Magnetträger
- 19: Verstellvorrichtung
- 20: Inspektionsfahrzeug
- 21: Chassis
- 22: Rad
- 23: Sensorarm
- 30,36: Sensor (zum Beispiel Ultraschall)
- 31: Führungsschiene (seitlich)
- 32: Wegmessvorrichtung (extern)
- 34: Arm
- 40: Steuerschaltung
- 41: Sensoren
- 42: Antrieb
- 43: Encoder (Wegmessvorrichtung)
- 44: Scan-Software
- 45: Stromversorgungseinheit
- 46: Rechner

## Patentansprüche

1. Inspektionsfahrzeug (20) für die Inspektion von im wesentlichen zylindrischen Objekten aus einem magnetisierbaren Material, insbesondere Rotoren (10) von Dampfturbinen oder anderen Turbinen, welches Inspektionsfahrzeug (20) ein Chassis (21) sowie eine Mehrzahl von Rädern (22) aufweist, die an dem Chassis (21) drehbar und zumindest teilweise motorisch antreibbar angeordnet sind, derart, dass das Chassis (21) auf den Rädern (22) am Aussenumfang des zu inspizierenden zylindrischen Objekts (10) entlang bewegt werden kann, wobei am Chassis (21) magnetische Mittel (17-19) angeordnet sind, welche das Inspektionsfahrzeug (20) auf der Oberfläche des zylindrischen Objekts (10) halten, und wobei das Inspektionsfahrzeug (20) eine ausreichende Bodenfreiheit aufweist, die ein problemloses Überfahren von am Aussenumfang des zu inspizierenden zylindrischen Objekts (10) befindlichen Hindernissen, insbesondere einem oder mehreren kreisringförmigen, aus der Zylinderoberfläche radial herausstehenden und sich mehrheitlich in Umfangsrichtung erstreckenden Hindernissen, insbesondere radial herausstehenden Dichtungsstreifen (16), ermöglicht, **dadurch gekennzeichnet, dass** die magnetischen Mittel (17-19) eine Magnetanordnung (17) umfassen, welche unterhalb des Chassis (21) im Bereich der Bodenfreiheit angeordnet ist.

2. Inspektionsfahrzeug nach Anspruch 1, **dadurch gekennzeichnet, dass** die Magnetanordnung (17) einen oder mehrere Permanentmagnete umfasst.

3. Inspektionsfahrzeug nach Anspruch 1, **dadurch gekennzeichnet, dass** die Magnetanordnung (17) einen oder mehrere, vorzugsweise an- und abschaltbare, Elektromagnete umfasst.

4. Inspektionsfahrzeug nach einem der Ansprüche 1-3, **dadurch gekennzeichnet, dass** zum Ausweichen von Hindernissen der Abstand der Magnetanordnung (17) zum Boden und/oder die Position der Magnetanordnung (17) quer zur Fahrtrichtung verstellbar ist.

5. Inspektionsfahrzeug nach einem der Ansprüche 1-4, **dadurch gekennzeichnet, dass** die Magnetanordnung (17) zur Verringerung der Wechselwirkung mit überfahrenen Hindernissen mit einer nicht-magnetischen Abdeckung versehen ist.

6. Inspektionsfahrzeug nach einem der Ansprüche 1-5, **dadurch gekennzeichnet, dass** die Räder (22) quer zur Fahrtrichtung verstellbar sind.

7. Inspektionsfahrzeug nach einem der Ansprüche 1-6, **dadurch gekennzeichnet, dass** das Inspektionsfahrzeug (20) eine Antriebseinheit (42) aufweist, welche wenigstens eines der Räder (22) auf steuerbare Weise antreibt.

8. Inspektionsfahrzeug nach einem der Ansprüche 1-7, **dadurch gekennzeichnet, dass** an dem Inspektionsfahrzeug (20) Mittel (31) zur seitlichen Führung des Fahrzeugs vorgesehen sind.

9. Inspektionsfahrzeug nach Anspruch 8, **dadurch gekennzeichnet, dass** als seitliche Führungsmittel an wenigstens einer Längsseite des Fahrzeugs eine sich in Fahrtrichtung erstreckende Führungsstruktur (31) angeordnet ist, mittels der das Inspektionsfahrzeug an einem Durchmesserabsatz des zylindrischen Objekts in Umfangsrichtung geführt werden kann.

10. Inspektionsfahrzeug nach Anspruch 9, **dadurch gekennzeichnet, dass** die Führungsstruktur eine längliche Führungsschiene (31) umfasst.

11. Inspektionsfahrzeug nach Anspruch 9 oder 10, **dadurch gekennzeichnet, dass** die Führungsstruktur bzw. Führungsschiene (31) magnetisch ist.

12. Inspektionsfahrzeug nach Anspruch 8, **dadurch gekennzeichnet, dass** die Führungsmittel Sensoren zur Messung des seitlichen Abstands aufweisen, welche mit Mitteln zur Steuerung der Fahrtrichtung des Fahrzeugs zusammenwirken.

13. Inspektionsfahrzeug nach einem der Ansprüche 1-12, **dadurch gekennzeichnet, dass** das Inspektionsfahrzeug (20) einen oder mehrere Sensoren (30) aufweist, welche zur, vorzugsweise zerstörungsfreien, Inspektion des zylindrischen Objekts geeignet sind.

14. Inspektionsfahrzeug nach Anspruch 13, **dadurch gekennzeichnet, dass** die Sensoren (30) verstellbar und/oder gefedert am Ende eines Sensorarms (23) befestigt sind, der sich vom Chassis (21) des Inspektionsfahrzeugs (20) aus in Fahrtrichtung erstreckt.

15. Inspektionsfahrzeug nach Anspruch 13 oder 14, **dadurch gekennzeichnet, dass** die Sensoren (30) als Ultraschallsensoren, insbesondere als Phased-Array-Sensoren, ausgebildet sind.

16. Inspektionsfahrzeug nach einem der Ansprüche 1-15, **dadurch gekennzeichnet, dass** am Inspektionsfahrzeug (20) Bewegungssensoren (43) vorgesehen sind, welche den zurückgelegten Weg und/oder die momentane Fahrgeschwindigkeit des Inspektionsfahrzeugs (20) aufnehmen.

17. Inspektionsfahrzeug nach Anspruch 16, **dadurch gekennzeichnet, dass** als Bewegungssensor ein Encoder (43) vorgesehen ist, welcher die Drehung wenigstens eines der Räder (22) aufnimmt.

18. Inspektionsfahrzeug nach Anspruch 17, **dadurch gekennzeichnet, dass** zusätzlich ein externer Bewegungssensor vorhanden ist, welcher die Bewegung des Fahrzeugs relativ zum Boden aufnimmt.

19. Inspektionsfahrzeug nach einem der Ansprüche 1-18, **dadurch gekennzeichnet, dass** eine Steuerung (41-46) zur Steuerung der Bewegung des Inspektionsfahrzeugs (20) auf der Oberfläche des zylindrischen Objekts vorgesehen ist, welche die Inspektionsergebnisse in Beziehung zur jeweiligen Position des Inspektionsfahrzeugs (20) auf der Oberfläche des zylindrischen Objekts setzt.

## Claims

1. Inspection vehicle (20) for the inspection of substantially cylindrical objects composed of a material which can be magnetized, in particular rotors (10) of steam turbines or other turbines, which inspection vehicle (20) has a chassis (21) and a plurality of wheels (22) which are arranged on the chassis (21) such that they can rotate and at least some of which can be driven by a motor or motors, such that the chassis (21) can be moved on the wheels (22) along the external circumference of the cylindrical object (10) to be inspected, wherein magnetic means (17 - 19) are arranged on the chassis (21) and hold the inspection vehicle (20) on the surface of the cylindrical object (10), and wherein the inspection vehicle (20) has adequate chassis clearance which allows it to move without any problems over obstructions which are located on the external circumference of the cylindrical object (10) to be inspected, in particular one or more annular obstructions which project radially from the cylinder surface and the majority of which extend in the circumferential direction, in particular radially projecting sealing strips (16), **characterized in that** the magnetic means (17 - 19) comprise a magnet arrangement (17) which is arranged under the chassis (21), in the area of the chassis clearance.

2. Inspection vehicle according to Claim 1, **characterized in that** the magnet arrangement (17) comprises one or more permanent magnets.

3. Inspection vehicle according to Claim 1, **characterized in that** the magnet arrangement (17) comprises one or more electromagnets, which can preferably be switched on and off.

4. Inspection vehicle according to one of Claims 1-3, **characterized in that**, in order to avoid obstructions, the distance between the magnet arrangement (17) and the surface beneath, and/or the position of the magnet arrangement (17) transversely with respect to the direction of travel, are/is adjustable.

5. Inspection vehicle according to one of Claims 1 - 4, **characterized in that** the magnet arrangement (17) is provided with a non-magnetic cover in order to reduce the interaction with obstructions being moved over.

6. Inspection vehicle according to one of Claims 1 - 5, **characterized in that** the wheels (22) can be adjusted transversely with respect to the direction of travel.

7. Inspection vehicle according to one of Claims 1 - 6, **characterized in that** the inspection vehicle (20) has a drive unit (42) which drives at least one of the wheels (22) in a controllable manner.

8. Inspection vehicle according to one of Claims 1 - 7, **characterized in that** means (31) for lateral guidance of the vehicle are provided on the inspection vehicle (20).

9. Inspection vehicle according to Claim 8, **characterized in that** a guide structure (31) which extends in the direction of travel is arranged as the lateral guide means on at least one longitudinal side of the vehicle, by means of which guide structure (31) the inspection vehicle can be guided at a diameter step on the cylindrical object in the circumferential direction.

10. Inspection vehicle according to Claim 9, **characterized in that** the guide structure comprises an elongated guide rail (31).

11. Inspection vehicle according to Claim 9 or 10, **characterized in that** the guide structure or guide rail (31) is magnetic.

12. Inspection vehicle according to Claim 8, **characterized in that** the guide means have sensors for measurement of the lateral clearance, which interact with means for controlling the direction of travel of the vehicle.

13. Inspection vehicle according to one of Claims 1 - 12, **characterized in that** the inspection vehicle (20) has one or more sensors (30) which are suitable for, preferably non-destructive, inspection of the cylindrical object.

14. Inspection vehicle according to Claim 13, **characterized in that** the sensors (30) are attached adjustably and/or in a sprung manner to the end of a sensor arm (23), which extends from the chassis (21) of the inspection vehicle (20) in the direction of travel.

15. Inspection vehicle according to Claim 13 or 14, **characterized in that** the sensors (30) are in the form of ultrasound sensors, in particular phased array sensors.

16. Inspection vehicle according to one of Claims 1 - 15, **characterized in that** movement sensors (43) are provided on the inspection vehicle (20) and record the distance travelled and/or the instantaneous speed of travel of the inspection vehicle (20).

17. Inspection vehicle according to Claim 16, **characterized in that** an encoder (43) which records the rotation of at least one of the wheels (22) is provided as the movement sensor.

18. Inspection vehicle according to Claim 17, **characterized in that** an external movement sensor is also provided, and records the movement of the vehicle relative to the surface beneath.

19. Inspection vehicle according to one of Claims 1 - 18, **characterized in that** a control system (41 - 46) is provided in order to control the movement of the inspection vehicle (20) on the surface of the cylindrical object, which control system (41 - 46) relates the inspection results to the respective position of the inspection vehicle (20) on the surface of the cylindrical object.

## Revendications

1. Véhicule d'inspection (20) pour l'inspection d'objets essentiellement cylindriques en un matériau magnétisable, en particulier de rotors (10) de turbines à vapeur ou d'autres turbines, véhicule d'inspection (20) qui présente un châssis (21) ainsi qu'une multiplicité de roues (22), qui sont montées sur le châssis (21) de façon rotative et au moins en partie de façon entraînable par un moteur, de telle manière que le châssis (21) puisse être déplacé sur les roues (22) le long du pourtour extérieur de l'objet cylindrique à inspecter (10), dans lequel des moyens magnétiques (17-19) sont disposés sur le châssis (21), qui maintiennent le véhicule d'inspection (20) sur la surface de l'objet cylindrique (10), et dans lequel le véhicule d'inspection (20) présente une garde au sol suffisante, qui permet un franchissement sans problèmes d'obstacles se trouvant sur le pourtour extérieur de l'objet cylindrique à inspecter (10), en particulier d'un ou de plusieurs obstacles annulaires circulaires, radialement saillants sur la surface du cylindre et s'étendant majoritairement en direction périphérique, en particulier des bandes d'étanchéité radialement saillantes (16), **caractérisé en ce que** les moyens magnétiques (17-19) comprennent un agencement d'aimants (17), qui est disposé en dessous du châssis (21) dans la région de la garde au sol.

2. Véhicule d'inspection selon la revendication 1, **caractérisé en ce que** l'agencement d'aimants (17) comprend un ou plusieurs aimant(s) permanent(s).

3. Véhicule d'inspection selon la revendication 1, **caractérisé en ce que** l'agencement d'aimants (17) comprend un ou plusieurs électroaimant(s), de préférence pouvant être connecté(s) et déconnecté(s).

4. Véhicule d'inspection selon l'une quelconque des revendications 1 à 3, **caractérisé en ce que** la distance de l'agencement d'aimants (17) au sol et/ou la position de l'agencement d'aimants (17) transversalement à la direction de déplacement est réglable afin d'éviter des obstacles.

5. Véhicule d'inspection selon l'une quelconque des revendications 1 à 4, **caractérisé en ce que** l'agencement d'aimants (17) est muni d'un recouvrement non magnétique pour réduire l'interaction avec des obstacles franchis.

6. Véhicule d'inspection selon l'une quelconque des revendications 1 à 5, **caractérisé en ce que** les roues (22) sont déplaçables transversalement à la direction de déplacement.

7. Véhicule d'inspection selon l'une quelconque des revendications 1 à 6, **caractérisé en ce que** le véhicule d'inspection (20) présente une unité d'entraînement (42), qui entraîne de façon réglable au moins une des roues (22).

8. Véhicule d'inspection selon l'une quelconque des revendications 1 à 7, **caractérisé en ce qu'**il est prévu sur le véhicule d'inspection (20) des moyens (31) pour le guidage latéral du véhicule.

9. Véhicule d'inspection selon la revendication 8, **caractérisé en ce qu'**en tant que moyen de guidage latéral, une structure de guidage (31) s'étendant dans la direction de déplacement est disposée sur au moins un côté longitudinal du véhicule, au moyen de laquelle le véhicule d'inspection peut être guidé en direction périphérique sur un épaulement diamétral de l'objet cylindrique.

10. Véhicule d'inspection selon la revendication 9, **caractérisé en ce que** la structure de guidage comprend un rail de guidage allongé (31).

11. Véhicule d'inspection selon la revendication 9 ou 10, **caractérisé en ce que** la structure de guidage ou le rail de guidage (31) est magnétique.

12. Véhicule d'inspection selon la revendication 8, **caractérisé en ce que** les moyens de guidage présentent des capteurs pour la mesure de la distance latérale, qui coopèrent avec des moyens pour la commande de la direction de déplacement du véhicule.

13. Véhicule d'inspection selon l'une quelconque des revendications 1 à 12, **caractérisé en ce que** le véhicule d'inspection (20) présente un ou plusieurs capteur(s) (30), qui convient/conviennent pour l'inspection, de préférence non destructive, de l'objet cylindrique.

14. Véhicule d'inspection selon la revendication 13, **caractérisé en ce que** les capteurs (30) sont fixés de façon réglable et/ou amortie à l'extrémité d'un bras de capteur (23), qui s'étend à partir du châssis (21) du véhicule d'inspection (20) dans la direction de déplacement.

15. Véhicule d'inspection selon la revendication 13 ou 14, **caractérisé en ce que** les capteurs (30) sont constitués par de capteurs à ultrasons, en particulier par des capteurs réseau à commande de phase.

16. Véhicule d'inspection selon l'une quelconque des revendications 1 à 15, **caractérisé en ce qu'**il est prévu sur le véhicule d'inspection (20) des détecteurs de mouvement (43), qui enregistrent le chemin parcouru et/ou la vitesse de déplacement instantanée du véhicule d'inspection (20).

17. Véhicule d'inspection selon la revendication 16, **caractérisé en ce qu'**il est prévu comme détecteur de mouvement un encodeur (43), qui enregistre la rotation d'au moins une des roues (22).

18. Véhicule d'inspection selon la revendication 17, **caractérisé en ce qu'**il se trouve en plus un détecteur de mouvement extérieur, qui enregistre le mouvement du véhicule par rapport au sol.

19. Véhicule d'inspection selon l'une quelconque des revendications 1 à 18, **caractérisé en ce qu'**il est prévu une commande (41-46) pour la commande du mouvement du véhicule d'inspection (20) sur la surface de l'objet cylindrique, qui marque les résultats de l'inspection en fonction de la position respective du véhicule d'inspection (20) sur la surface de l'objet cylindrique.
